# EUROPÄISCHE PATENTSCHRIFT

(11) **EP 0 797 818 B1**
(45) Veröffentlichungstag und Bekanntmachung des Hinweises auf die Patenterteilung: **07.07.1999**
(21) Anmeldenummer: 96928306.8
(22) Anmeldetag: 05.09.1996
(51) Int. Cl.: G08G 1/127, H04B 7/26

(54) **VERFAHREN UND VORRICHTUNG ZUR FUNKKOMMUNIKATION IN VERKEHRSTECHNISCHEN LEITSYSTEMEN**
PROCESS AND DEVICE FOR RADIO COMMUNICATION IN TRAFFIC GUIDANCE SYSTEMS
PROCEDE ET DISPOSITIF DE RADIOCOMMUNICATION DANS DES SYSTEMES DE GUIDAGE DE LA CIRCULATION ROUTIERE

(30) Priorität: 26.09.1995 CH 272095
(43) Veröffentlichungstag der Anmeldung: 01.10.1997
(73) Patentinhaber: HÄNI PROLECTRON AG, CH-9552 Bronschhofen/Wil (CH)
(72) Erfinder: GEHRIG, Josef, CH-9536 Schwarzenbach (CH)
(74) Vertreter: Wächter, Roland
(86) Internationale Anmeldenummer: CH9600306
(87) Internationale Veröffentlichungsnummer: WO9712348

(56) Entgegenhaltungen:
- GB-A- 2 056 820
- US-A- 3 644 883
- US-A- 4 041 393
- VERKEHR UND TECHNIK, Nr. 12, 1992, BERLIN, Seiten 495-501, XP000567569 J. GEHRIG: "MODERNE BETRIEBSLEITSYSTEME AUF BASIS VON DATENFUNKNETZEN" in der Anmeldung erwähnt
- PROCEEDINGS OF CONVERGENCE 80. 30TH ANNUAL CONFERENCE OF THE IEEE VEHICULAR TECHNOLOGY SOCIETY. INTERNATIONAL CONFERENCE ON TRANSPORTATION ELECTRONICS, DEARBORN, MI, USA, 15-17 SEPT. 1980, 1980, NEW YORK, NY, USA, IEEE, USA, Seiten D4-2/1-6, XP002005080 WIKSTEN C L ET AL: "Monitor-an automatic bus location and communications system for Chicago"

## Beschreibung

Die vorliegende Erfindung betrifft ein Verfahren und eine Vorrichtung nach dem Oberbegriff des Patentanspruchs 1 bzw. 10 oder 11.

Zur Gewährleistung reibungsloser Abläufe in mittleren und grossen Verkehrsbetrieben, insbesondere im öffentlichen Personen-Nahverkehr (ÖPNV), werden moderne rechnergesteuerte Betriebsleitsysteme (RBL) eingesetzt, wie sie in "Moderne Betriebsleitsysteme auf Basis von Datenfunknetzen", Verkehr und Technik, Sonderdruck, Heft 12, Erich Schmidt Verlag, Berlin 1992 von Dr. J. Gehrig beschrieben sind. Die Kommunikation zwischen den Systemeinheiten: der Leitstelle, den Fahrzeugen sowie den dezentralen Steuergeräten, z.B. zur Beeinflussung von Lichtsignalanlagen, die den Verkehrsfluss steuern, erfolgt normalerweise über Funk in Echtzeit. Die Datenübertragung von Punkt zu Punkt, z.B. von ortsfesten Streckenpunkten zu den Fahrzeugen, erfolgt oft über eine Infrarot-Verbindung. Über das Funknetz erfolgt nicht nur ein Informationsaustausch zwischen dem Leitstellenpersonal und den Fahrzeugführem, sondern es werden auch Informationen für die optische und akustische Fahrgastinformation an Knotenpunkten oder Haltestellen übertragen. Die Gespräche zwischen dem Personal in der Leitstelle und/oder den Fahrzeugen werden meist analog über wenigstens einen Sprachkanal übertragen. Zur Steuerung der peripheren Systemeinheiten und zur zyklischen Erfassung der aktuellen Betriebsdaten werden digitale Telegramme verwendet, die in analoge Signale umgewandelt (Modulation) und über wenigstens einen Datenkanal übertragen werden. Zur Optimierung der Abläufe innerhalb des Leitsystems werden dezentral vorhandene systemrelevante Informationen von der Leitstelle bevorzugt abgerufen und ausgewertet. Für die Leitstelle ist es daher von Bedeutung, mit allen Systemeinheiten, insbesondere mit den Fahrzeugen dauernd in Kontakt zu stehen. Bei modernen verkehrstechnischen Kommunikationssystemen werden zwischen der zentralen Leitstelle und den peripheren Systemeinheiten vorzugsweise zwei Datenkanäle vorgesehen, über die eine permanente bidirektionale Funkbereitschaft möglich ist. Durch ein in den Fahrzeugen vorgesehenes Funkgerät können beispielsweise die im ersten Kanal von der Leitstelle abgegebenen Schaltbefehle, die z.B. eine Gesprächsaufforderung enthalten, empfangen und beantwortet werden. Nach dem Erhalt einer spontan auftretenden Gesprächsaufforderung wird unmittelbar ein Antworttelegramm über den zweiten Kanal vom Fahrzeug an die Leitstelle zurückgesandt. Von der Leitstelle können mit dem gleichen Verfahren aktuelle Daten aus den peripheren Systemeinheiten abgerufen werden. Ferner wird an die in diesen peripheren Systemeinheiten vorhandenen Funkgeräte bedarfsweise die Instruktion abgegeben, für den Aufbau einer Sprechfunkverbindung auf einen von der Leitstelle bestimmten Kanal umzuschalten. Nach abgeschlossenem Gespräch wird von der Leitstelle über den verwendeten Sprachkanal ein Signal abgegeben, durch das das Funkgerät veranlasst wird, die Funkverbindung wieder über die beiden Datenkanäle zu erstellen. Ferner besteht die Möglichkeit, das Funkgerät auch auf einen weiteren Sprachkanal umzuschalten, auf dem Sprachsignale zwischen Systemeinheiten im Nahbereich über kurze Distanzen austauschbar sind.

Nachteilig bei diesen bekannten Systemen ist, dass die in den peripheren Systemeinheiten vorgesehenen Funkgeräte durch die Überwachung der von der Leitstelle auf dem ersten Datenkanal übertragenen Aufruftelegramme (Polling-Betrieb) weitgehend ausgelastet und daher für eine weitere Verwendung nicht verfügbar sind. Falls die in den peripheren Systemeinheiten vorgesehenen Funkgeräte alternativ für die Übertragung von Sprachsignalen in den dazu vorgesehenen Sprachkanälen eingesetzt werden, können die über den ersten Datenkanal übertragenen Aufruftelegramme nicht mehr überwacht werden.

Der vorliegenden Erfindung liegt daher die Aufgabe zugrunde, ein Verfahren sowie eine Vorrichtung zur Kommunikation in verkehrstechnischen Leitsystemen festzulegen, wodurch die für den Verkehrsbetrieb reservierten Daten- und Sprachkanäle besser genutzt werden können. Gleichzeitig soll auch sichergestellt werden, dass im Vergleich zu bekannten Systemen praktisch keine Datenverluste mehr auftreten.

Diese Aufgabe wird durch die im Patentanspruch 1 bzw. 10 oder 11 angegebenen Massnahmen gelöst. Vorteilhafte Ausgestaltungen der Erfindung sind in weiteren Ansprüchen angegeben.

Durch die erfindungsgemässen Massnahmen wird der Nutzungsgrad der für verkehrstechnische Leitsysteme verfügbaren Daten- und Sprachkanäle optimiert. Dabei wird eine erhöhte Auslastung der Sprachkanäle erzielt, ohne dass von der Leitstelle auf den Datenkanälen übertragene Daten verloren gehen:

Die Erfindung wird nachfolgend anhand von Zeichnungen beispielsweise näher erläutert. Dabei zeigt:
- Fig. 1: den zeitlichen Verlauf der Funksignale, die nach einem ersten Verfahren über verschiedene Daten- und Sprachkanäle übertragen werden,
- Fig. 2: den zeitlichen Verlauf der Funksignale, die nach einem zweiten Verfahren über verschiedene Daten- und Sprachkanäle übertragen werden,
- Fig. 3: eine Übersicht von zentralen und peripheren Systemeinheiten, die nach dem ersten oder zweiten Verfahren über die Daten- und Sprachkanäle miteinander kommunizieren,
- Fig. 4: eine für eine periphere Systemeinheit zur Kommunikation nach dem ersten Verfahren vorgesehene Vorrichtung und
- Fig. 5: eine für eine periphere Systemeinheit zur Kommunikation nach dem zweiten Verfahren vorgesehene Vorrichtung.

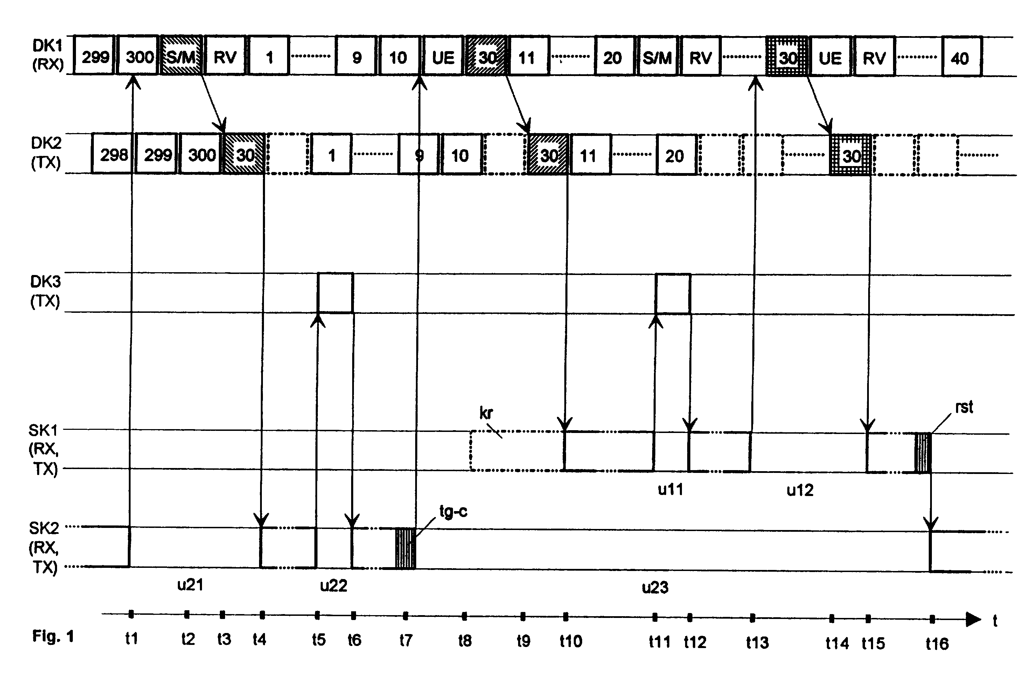

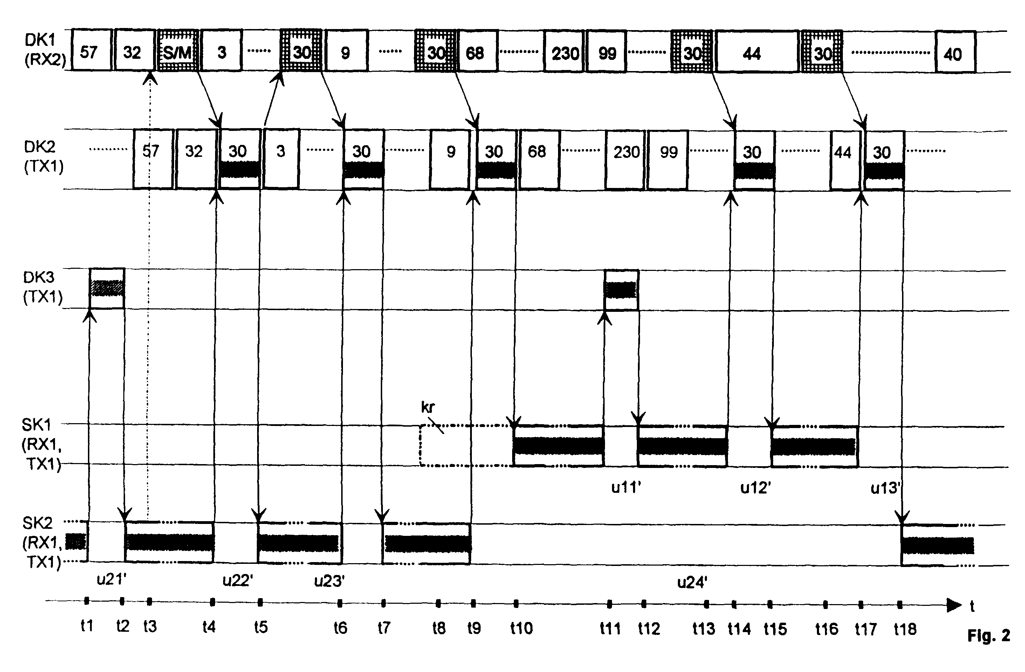

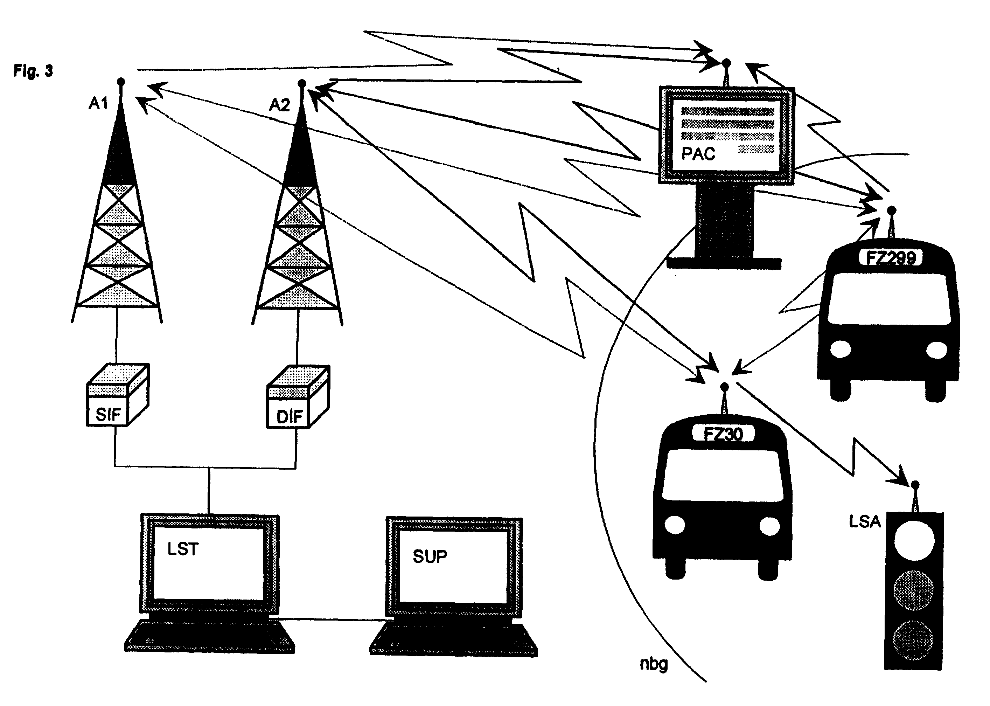

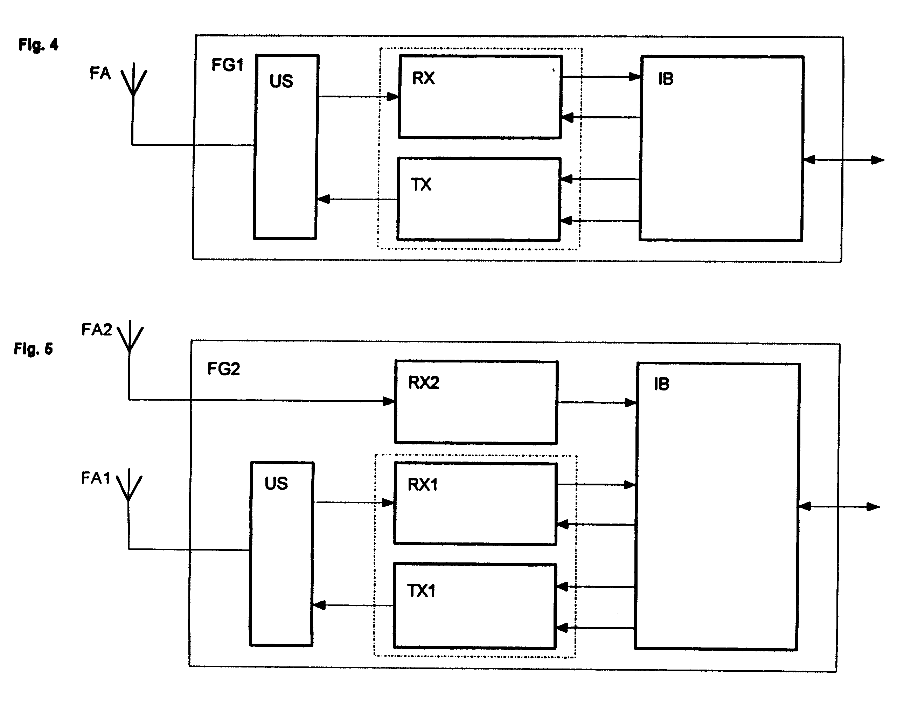

Fig. 1 zeigt Datenverläufe in einem ersten und einem zweiten Datenkanal DK1, DK2 sowie den Verlauf von Sprachsignalen in einem ersten und einem zweiten Sprachkanal SK1, SK2. Im ersten Datenkanal DK1 werden Daten von einer zentralen Systemeinheit, z.B. der in Fig. 3 gezeigten Leitstelle LST, zu peripheren Systemeinheiten, z.B. zu den dem System gemeldeten Fahrzeugen FZ oder zu Passagierinformationssystemen PAC, übertragen. Aufgrund dieser im ersten Datenkanal DK1 übertragenen Daten werden von den Fahrzeugen FZ (oder von den weiteren peripheren Systemeinheiten PAC) entsprechende Antwortdaten über den zweiten Datenkanal DK2 zur Leitstelle LST übermittelt. Die Leitstelle LST kann dem Fahrzeug FZ auch die Aufforderung übermitteln, auf den ersten Sprachkanal SK1 umzuschalten, damit ein Gespräch zwischen dem Leitstellenpersonal und dem Fahrzeugführer erfolgen kann, ohne dass die beiden Datenkanäle DK1 und DK2 blockiert werden. Nach Abschluss des Gesprächs übermittelt die Leitstelle LST dem Fahrzeug FZ über den ersten Daten- oder Sprachkanal DK1 bzw. SK1 die Aufforderung zur Umschaltung des Kanals. Damit wesentliche Daten auch während des Gesprächsvorgangs zum Fahrzeug FZ oder vom Fahrzeug FZ zur Leitstelle LST übertragen werden können, werden erfindungsgemäss die unten beschriebenen Massnahmen vorgesehen. Von grosser Bedeutung für den reibungslosen Ablauf des Verkehrs ist der zweite Sprachkanal SK2, über den hauptsächlich die Kommunikation im Nahbereich, z.B. zwischen den Fahrzeugführern, erfolgt. Erfindungsgemäss wird dieser sogenannte Nahbereichskanal SK2 auch dazu verwendet, um Informationen spontan und ohne Verzögerung von der Leitstelle LST zum Fahrzeug FZ zu übermitteln. Da diesem Nahbereichskanal SK2 eine derart grosse Bedeutung zukommt, wird dieser erfindungsgemäss als Normalarbeits- oder Defaultkanal verwendet, ohne dass in anderen Kanälen übertragene Meldungen für das Fahrzeug FZ verloren gehen. Nach der Kommunikation auf den anderen Sprach- oder Datenkanälen wird daher jeweils auf den Nahbereichskanal SK2 zurückgeschaltet. Eine Ausnahme bilden lediglich Kanalwechsel, die während eines Gesprächs aus dem ersten Sprachkanal SK1 erfolgen. In diesem Fall soll der Rücksprung zum Nahbereichskanal SK2 erst nach Beendigung des Gesprächs erfolgen. Periphere Systemeinheiten LSA, PAC, die nicht für die Kommunikation auf den Sprachkanälen SK1, SK2 vorgesehen sind, bleiben im Normalbetriebszustand, während dem keine weiteren Informationen von der zentralen Einheit LST vorliegen, auf den Empfang der auf dem ersten oder auf weiteren Datenkanälen DK1, DK3 übertragenen Daten geschaltet.

Diese Vorgaben können grundsätzlich durch die zwei nachfolgend beschriebenen erfindungsgemässen Lösungen erfüllt werden.

In einer ersten beispielsweise angegebenen Ausgestaltung der Erfindung erfolgt die Datenübertragung auf den ersten beiden Datenkanälen DK1, DK2 im Zeitschlitzverfahren. Jeder peripheren Systemeinheit FZ, PAC wird dabei ein Zeitschlitz zugeordnet, innerhalb dem der betreffenden Einheit zugehörige Daten übertragen werden. In Fig. 1 sind beispielsweise Zeitschlitze für 300 periphere Systemeinheiten FZ, PAC vorgesehen, die in Blöcken von je 10 Einheiten aufgerufen werden. Jeder Aufrufblock enthält dazu vorzugsweise 12 Zeitschlitze, von denen der erste für die Abgabe von ereignisspezifischen Informationen an eine, mehrere oder alle peripheren Systemeinheiten FZ, PAC vorgesehen ist. Z.B. erfolgt über den ersten Zeitschlitz beim Aufstarten des Systems oder nach einem Systemunterbruch die Zeitschlitzzuteilung an alle angemeldeten peripheren Systemeinheiten FZ, PAC. Ferner sind von der Leitstelle LST parametrierbare Sammelabfragen über diesen ersten Zeitschlitz absetzbar. Der zweite Zeitschlitz, der eine Flexibilisierung des Datenverkehrs ermöglicht, ist für beliebige Aufrufe frei belegbar. Die verbleibenden zehn Zeitschlitze sind für den selektiven Aufruf der betreffenden peripheren Systemeinheiten FZ, PAC vorgesehen. Der dreissigste Aufrufblock, innerhalb dem die Kommunikation mit den peripheren Systemeinheiten FZ, PAC mit den Adressnummem 291 bis 300 erstellt wird, schliesst den Aufrufzyklus ab. Jede der 300 peripheren Systemeinheiten FZ, PAC kennt nach der Anmeldeprozedur den Zeitpunkt, zu dem die Leitstelle LST mit ihr in Kontakt treten wird und hat daher die restliche Zykluszeit (> 99%) zur Verfügung, um Sprachsignale auf den Sprachkanälen SK1, SK2 zu übermitteln. Ein in den peripheren Systemeinheiten FZ, PAC vorgesehenes Funkgerät FG1 (s. Fig. 4), das u.a. eine Empfangs- und eine Sendeeinheit RX bzw. TX aufweist, arbeitet daher normalerweise im Nahbereichskanal SK2 und wechselt periodisch für die Dauer eines Zeitschlitzes zu den Datenkanälen DK1 und DK2. Da ein Abfragezyklus mit z.B. 300 Funkpartnern relativ lange dauert (30*12 Zeitschlitze * 0,05 Sekunden pro Zeitschlitz ergibt eine Periodendauer von 18 Sekunden pro Zyklus), kann zwischenzeitlich die Notwendigkeit für einen Datenaustausch zwischen einer peripheren Systemeinheit FZ, PAC und der Leitstelle LST auftreten. Dazu kann die periphere Systemeinheit FZ, PAC als Antwort auf einen Sammelaufruf (Broadcast-Telegramme auf dem ersten Datenkanal DK1, Zeitschlitz S/M), der im ersten Zeitschlitz innerhalb eines Aufrufblocks übertragen wird, im zweiten Datenkanal DK2 eine Meldung zur Leitstelle LST übertragen. Diese Meldung kann z.B. auch ein Antrag zur Kommunikation zwischen der Leitstelle LST und der peripheren Systemeinheit FZ, PAC über den ersten Sprachkanal SK1 sein. Falls jedoch die Leitstelle LST mit der peripheren Systemeinheit FZ, PAC über den ersten Sprachkanal SK1 kommunizieren will, ohne die restliche Zykluszeit abzuwarten, so gibt sie ein Telegramm tg-c über den Nahbereichskanal SK2 an die betreffende periphere Systemeinheit FZ, PAC ab und veranlasst diese, direkt auf den ersten Sprachkanal SK1 oder vorerst auf den ersten Datenkanal DK1 zum Empfang weiterer Instruktionen umzuschalten. Nicht nur während der Kommunikation im Nahbereichskanal SK2 sondern auch während der Kommunikation im Sprachkanal SK1 werden von jeder peripheren Systemeinheit FZ, PAC die zyklisch von der Leitstelle LST abgegebenen Abfragen auf dem ersten Datenkanal DK1 im zugeordneten Zeitschlitz empfangen und ausgewertet. Während der Kommunikation in den Sprachkanälen SK1, SK2 können Daten bedarfsweise auch sporadisch über weitere Datenkanäle (z.B. Datenkanal DK3) an andere periphere Systemeinheiten PAC, LSA abgegeben werden. Über den Datenkanal DK3 werden beispielsweise die Anforderungen für Durchfahrt an Lichtsignalanlagen LSA (Fig. 3) übermittelt. Ebenso können über den Datenkanal DK3 spontan Abfahrtsmeldungen von einem Fahrzeug FZ an Systemeinheiten PAC übertragen werden.

In Fig. 1 ist ein möglicher Kommunikationsverlauf innerhalb der verschiedenen Daten- und Sprachkanäle DK1, DK2, DK3, SK1 und SK2 für das Fahrzeug mit der Adressnummer 30 (FZ30) dargestellt, das mit einem Funkgerät FG1 gemäss Fig. 4 ausgerüstet ist.

Vor dem Zeitpunkt t1 ist das Funkgerät FG1 des Fahrzeugs FZ30 auf den Sprachkanal SK2 zur Kommunikation mit weiteren peripheren Systemeinheiten FZ geschaltet, die sich in der Nähe des Fahrzeugs FZ30 befinden. Z.B. kann ein Fahrzeugführer, der sich verspätet hat, den Führer eines Fahrzeugs FZ, das für die Anschlussverbindung vorgesehen ist, über die Verspätung informieren. Ferner kann sich der Fahrzeugführer permanent über das Verkehrsgeschehen in der nähren Umgebung durch das Abhören des Nahbereichskanals SK2 informieren. Zum Zeitpunkt t1 entsteht der Bedarf zur Abgabe einer Meldung an die Leitstelle LST. Da die Meldung wichtig ist, soll nicht die restliche Zykluszeit von maximal 18 Sekunden abgewartet werden, bis die Meldung an die Leitstelle LST abgegeben werden kann. Die Empfangseinheit RX des Funkgerätes FG1 wird daher zum Zeitpunkt t1 auf den ersten Datenkanal DK1 umgeschaltet. Nach der Detektion eines Sammelaufrufs von der Leitstelle LST (Zeitpunkt t2), der innerhalb des ersten Zeitschlitzes des nächsten Aufrufblocks erfolgt, sendet das Funkgerät FG1 über den zweiten Datenkanal DK2 zum Zeitpunkt t3 die dringliche Meldung (Alarm, Überfall, Unfall, etc.) im zugehörigen Zeitschlitz an die Leitstelle LST und schaltet nachfolgend (Zeitpunkt t4) zurück auf den Nahbereichskanal SK2. Ferner kann auch eine Quittierung der Meldung auf dem ersten Datenkanal DK1 abgewartet werden. Der durch den beschriebenen Vorgang entstehende Gesprächsunterbruch u21 entspricht etwa der Länge von 5 Zeitschlitzen. Zu einem nachfolgenden Zeitpunkt t5 ist spontan ein Anforderungstelegramm über den Datenkanal DK3, z.B. an eine Lichtsignalanlage LSA, zu senden. Nach Ausstrahlung des Telegramms, zum Zeitpunkt t6, wird das Funkgerät FG1 wieder zurück auf den Nahbereichskanal SK2 geschaltet. Der durch diesen Vorgang entstehende Gesprächsunterbruch u22 entspricht etwa der Länge von 3 Zeitschlitzen. Zu einem Zeitpunkt t7 will die Leitstelle LST mit dem Fahrzeug FZ30 in Kontakt treten und sendet dazu über den Nahbereichskanal SK2 ein an das Fahrzeug FZ30 adressiertes Umschalttelegramm tg-c. Im beschriebenen Fall soll das Funkgerät FG1 zuerst auf den ersten Datenkanal DK1 und erst später, nach Erhalt weiterer Instruktionen (Zeitpunkt t8), auf den ersten Sprachkanal SK1 umgeschaltet werden. Nach der Quittierung des von der Leitstelle LST übertragenen Telegramms (Zeitpunkt t9) wird das Funkgerät FG1 zum Zeitpunkt t10 auf den ersten Sprachkanal SK1 umgeschaltet, auf dem der Fahrzeugführer nun ein Gespräch mit dem Leitstellenpersonal führen kann. Vorzugsweise wird der Sprachkanal SK1 bereits vor der Gesprächsaufforderung durch die Leitstelle LST reserviert (siehe Reservationsblock kr). Zwischen den Zeitpunkten t11 und t12 wird über den dritten Datenkanal DK3 ein weiteres Anforderungstelegramm an eine Lichtsignalanlage LSA übertragen, wodurch während etwa 3 Zeitschlitzen eine Unterbrechung u11 des Gesprächs zwischen Leitstelle LST und Fahrzeug FZ30 entsteht. Zum Zeitpunkt t13 schaltet das Funkgerät FG1 für den Empfang der zyklisch von der Leitstelle LST abgegebenen fahrzeugspezifischen Abfrage auf den ersten Datenkanal DK1 um, quittiert diese Abfrage zum Zeitpunkt t14 und schaltet zum Zeitpunkt t15 auf den Sprachkanal SK1 zurück. Wichtige Daten können von der Leitstelle LST daher auch zum Fahrzeug FZ30 übertragen werden, währenddem der Führer dieses Fahrzeugs FZ30 mit dem Leitstellenpersonal ein Gespräch führt. Der durch diesen Vorgang entstehende Gesprächsunterbruch u12 entspricht etwa der Länge von 5 Zeitschlitzen. Zum Zeitpunkt t16 signalisiert die Leitstelle LST das Ende des Gesprächs und übermittelt dazu ein einige Millisekunden dauemdes Rückschaltsignal rst einer bestimmten Frequenz, nach dessen Empfang das Funkgerät FG1 auf den Nahbereichskanal SK2 zurückgeschaltet wird. Der Unterbruch u23 der Kommunikation im Nahbereichskanal SK2, der zum Zeitpunkt t7 begann, ist abhängig von der Dauer des Gesprächs, das zwischen Leitstelle LST und Fahrzeug FZ30 geführt wurde.

Mit geringem Aufwand - pro periphere Systemeinheit FZ, PAC wird nur ein Funkgerät benötigt (siehe Fig. 4) - kann durch das erfindungsgemässe Verfahren eine optimale Nutzung der vorgesehenen Datenkanäle SK, DK gewährleistet werden. Der Führer des Fahrzeugs FZ30 ist durch den Empfang der Meldungen über den Nahbereichskanal SK2 immer gut informiert und kann von der Leitstelle LST periodisch oder spontan kontaktiert werden.

Das erfindungsgemässe Verfahren erlaubt daher die Datenkommunikation zwischen Leitstelle LST und Fahrzeug FZ, währenddem der Fahrzeugführer ein Gespräch über den ersten oder zweiten Sprachkanal SK1, SK2 führt. Die Betriebsabläufe, für die sporadisch oder routinemässig eine Datenübertragung durchzuführen ist, werden durch die Kanalumschaltungen von und zu den Sprachkanälen SK1 oder SK2 daher nicht beeinträchtigt. Z.B. können während des Gesprächs Informationstexte für die Fahrgäste übermittelt oder Betriebsdaten aus dem Bordrechner (siehe Fig. 3, Bordrechner IB) des Fahrzeugs FZ abgerufen werden.

Durch die Reduktion des Geräteaufwandes in den peripheren Systemeinheiten FZ und PAC auf ein Minimum kann mit dem beschriebenen Verfahren und der Vorrichtung jedoch nicht zu jedem Zeitpunkt die bei höheren Ansprüchen gewünschte Flexibilität gewährleistet werden. Durch das zyklische Überwachen der von der Leitstelle LST im Datenkanal DK1 übertragenen Abfragen, einmal pro Abfragezyklus oder einmal pro abgegebenem Aufrufblock (Zeitschlitz 2), entstehen Zeitverluste bzw. unerwünschte Unterbrechungen der Kommunikation in den Sprachkanälen SK1, SK2. Zudem wird das über den Nahbereichskanal SK2 an das Fahrzeug FZ übertragene Telegramm tg-c nur dann empfangen, wenn das von der Leitstelle LST abgegebene Signal im Verhältnis zu den weiteren im Nahbereichskanal SK2 auftretenden Signalen genügend stark ist. Die spontane Datenübertragung von der Leitstelle LST zu den peripheren Systemeinheiten FZ ist daher mit diesem Verfahren und der entsprechenden Vorrichtung nicht jederzeit gewährleistet.

Zur Reduktion der beschriebenen Zeitverluste wird bevorzugt das nachfolgend anhand von Fig. 2 beschriebene Verfahren angewendet, bei dem ein Funkgerät FG2 mit zwei Empfangseinheiten RX1, RX2 und einer Sendeeinheit TX1 benötigt wird (siehe Fig. 5). Die erste Empfangseinheit RX1 ist zum Empfang der auf den Sprachkanälen SK1, SK2 übertragenen Signale vorgesehen. Durch die zweite Empfangseinheit RX2 werden gleichzeitig die im ersten Datenkanal DK1 übertragenen Daten empfangen. Dadurch werden alle von der Leitstelle LST abgegebenen Abfragen von den peripheren Systemeinheiten FZ, PAC überwacht. Die Reihenfolge der von der Leitstelle LST abzufragenden peripheren Systemeinheiten FZ, PAC ist beliebig und somit betrieblich optimierbar. Auf eine starre zyklische Ausstrahlung der fahrzeugspezifischen Abfragen in zugeordneten Zeitschlitzen wird verzichtet. In vorzugsweise regelmässigen Abständen werden hingegen Sammelaufrufe (SIM) ausgesendet, durch die alle peripheren Systemeinheiten FZ, PAC zur Abgabe von wichtigen Meldungen eingeladen werden. Von der Leitstelle LST können zudem über den ersten Datenkanal DK1 Informationstexte vorzugsweise variabler Länge an die zu kontaktierenden peripheren Systemeinheiten FZ, PAC abgegeben werden. Aus Fig. 2 ist ersichtlich, dass zuerst die Fahrzeuge FZ mit Adressnummem 57 und 32 kontaktiert werden, anschliessend erfolgt ein Sammelaufruf für alle Fahrzeuge FZ und danach werden u.a. die Fahrzeuge FZ oder weitere periphere Systemeinheiten PAC mit Adressnummem 3, 30, 9, etc. gerufen. Der Nahbereichskanal SK2 wird in den peripheren Systemeinheiten FZ auch hier wieder als Normalarbeits- oder Defaultkanal verwendet. Durch die Sendeeinheit TX1 werden bedarfsweise Daten in den Datenkanälen DK2, DK3 bzw. Sprachsignale in den Sprachkanälen SK1, SK2 übertragen.

Ein möglicher Verlauf von Kommunikationen innerhalb der verschiedenen Daten- und Sprachkanäle DK1, DK2, DK3, SK1 und SK2 nach diesem zweiten Verfahren mit dem erweiterten Funkgerät FG2 gemäss Fig. 5 für das Fahrzeug mit der Adressnummer 30 (FZ30) ist in Fig. 2 dargestellt.

Vor dem Zeitpunkt t1 ist die erste Empfangseinheit RX1 des im Fahrzeug FZ30 vorgesehenen Funkgeräts FG2 für die Kommunikation mit im Nahbereich verkehrenden Fahrzeugen FZ auf den Nahbereichskanal SK2 geschaltet. Zwischen den Zeitpunkten t1 und t2 wird über die Sendeeinheit TX1 spontan ein Telegramm auf dem dritten Datenkanal DK3, z.B. an eine Lichtsignalanlage LSA, abgegeben. Der dadurch entstehende Gesprächsunterbruch u21' entspricht normalerweise etwa der Länge von etwa 3 Zeitschlitzen. Zum Zeitpunkt t4 fallen im Fahrzeug FZ30 Informationen an, die an die Leitstelle LST zu übertragen sind. Nach dem Empfang des von der zweiten Empfangseinheit RX2 detektierten Sammelaufrufs (S/M) wird die Sendeeinheit TX1 auf den Datenkanal DK2 geschaltet und strahlt zwischen den Zeitpunkten t4 und t5 die zu übertragende Meldung aus. Zwischen den Zeitpunkten t5 und t6 sowie später zwischen t7 und t9 wird die Übertragung im Nahbereichskanal SK2 fortgesetzt. Zwischen den Zeitpunkten t6 und t7 wird ein Folgeaufruf von der Leitstelle LST beantwortet. Zu einem späteren Zeitpunkt t8 empfängt die zweite Empfangseinheit RX2 einen Aufruf von der Leitstelle LST mit der Aufforderung zur Umschaltung auf den ersten Sprachkanal SK1. Dieser Aufruf wird zum Zeitpunkt t9 durch die Abgabe eines Antworttelegramms über den zweiten Datenkanal DK2 quittiert, wonach zum Zeitpunkt t10 zur Übertragung auf den ersten Sprachkanal SK1 umgeschaltet wird. Die Kommunikation auf dem Sprachkanal SK1 zwischen der Leitstelle LST und dem Fahrzeug FZ30 wird zwischen den Zeitpunkten t11 und t12 zugunsten der Abgabe eines Anforderungstelegramms über den dritten Datenkanal DK3 unterbrochen. Zum späteren Zeitpunkt t13 empfängt die zweite Empfangseinheit RX2 einen weiteren Aufruf von der Leitstelle LST, der zwischen den Zeitpunkten t14 und t15 durch ein Antworttelegramm quittiert wird. Zum Zeitpunkt t16 erfolgt ein weiterer Aufruf, in dem dem Fahrzeug FZ30 das Ende des Gesprächs mitgeteilt wird. Eine Quittierung dieses Aufrufs erfolgt zwischen den Zeitpunkten t17 und t18, wonach die erste Empfangseinheit RX1 wieder auf den Nahbereichskanal SK2 zurückgeschaltet wird.

Fig. 3 zeigt zentrale und periphere Systemeinheiten LST, SUP bzw. PAC, FZ30, FZ299, LSA eines Kommunikationssystems, die nach dem ersten oder zweiten Verfahren bedarfsweise über die Daten- und Sprachkanäle DK1, DK2, DK3, SK1 und SK2 nach einem der oben beschriebenen Verfahren miteinander kommunizieren. Für die Übertragung der Daten werden in den Systemeinheiten LST, SUP bzw. PAC, FZ001, ..., FZn bevorzugt die aus der EP-A-0 566 773 bekannten Vorrichtungen und Modulationsverfahren eingesetzt. Dem Fachmann sind jedoch auch weitere Vorrichtungen bekannt, anhand denen Daten- und Sprachsignale über die vorhandenen Kanäle übertragen werden können. Die Leitstelle LST steht mit den peripheren Systemeinheiten FZ, PAC über die Datenkanäle DK1 und DK2 sowie gegebenenfalls über die Sprachkanäle SK1, SK2 in Kontakt. Die vorgesehenen mit Antennen A1 bzw. A2 verbundenen Sende- und Empfangseinheiten der Funkrechner SIF bzw DIF in der Leitstelle LST verfügen üblicherweise über eine Sendeleistung, die der Sendeleistung der in den peripheren Systemeinheiten FZ, PAC vorgesehenen Sender TX, TX1 entspricht. Die Leitstelle LST sendet üblicherweise mit Gleichwelle und führt eine Diversity-Auswertung der empfangenen Signale durch. Diese Verfahren werden in mehreren im praktischen Einsatz stehenden Anlagen bereits angewendet. Die zwischen der Leitstelle LST und den Fahrzeugen FZ auszutauschenden Sprachsignale werden via die Antenne A1 im Sprachkanal SK1 übertragen. Zur spontanen Kontaktierung des Fahrzeugs FZ30 nach dem ersten Verfahren sendet die Leitstelle LST über die Antenne A1 und den Nahbereichskanal SK2 ein Telegramm (tg-c) an das zu kontaktierende Fahrzeug FZ. Da der Nahbereichskanal SK2 normalerweise durch Gespräche belegt ist, muss die Signalstärke des Telegramms (tg-c) die Signalstärke der lokal geführten Gespräche deutlich übertreffen. Die Sendeleistung der Fahrzeuge FZ und allfälliger Handfunkgeräte im Nahbereichskanal SK2 ist um den Faktor 10...100 kleiner als die Sendeleistung der Leitstelle LST im zweiten Sprachkanal SK2. Über den Nahbereichskanal SK2 können z.B. die in Fig. 3 gezeigten Fahrzeuge FZ30 und FZ299, die sich im Nahbereich (s. Fig. 3, Nahbereichsgrenze nbg z.B. des Fahrzeugs FZ299) befinden, miteinander kommunizieren. Vom Fahrzeug FZ30 werden zwischendurch über den Datenkanal DK3 Anforderungstelegramme an die Lichtsignalanlage LSA gesandt, um eine Umschaltung auf Grünlicht zu bewirken. Ebenso können spontan Abfahrtstelegramme z.B. vom Fahrzeug FZ299 zur direkten Steuerung der Passagierinformationssysteme PAC (z.B. Abgabe eines Befehls zur Löschung einer Linienanzeige nach Abfahrt des Fahrzeugs FZ299) auf einem weiteren Datenkanal (z.B. DK3) gesendet werden. Von der Leitstelle LST werden ferner zyklisch Aufruftelegramme über den Funkrechner DIF und die Antenne A2 auf dem Datenkanal DK1 an alle angemeldeten peripheren Systemeinheiten FZ, PAC abgegeben, welche in den vorgesehenen Zeitschlitzen Antworten über den zweiten Datenkanal DK2 retoumieren. Der zentralen Systemeinheit SUP (Statistik und Planung) werden ferner die von den peripheren Systemeinheiten FZ erhaltenen Daten zur Auswertung zugeführt, aufgrund derer die bestehenden Plandaten überarbeitet und optimiert werden.

Fig. 4 zeigt das für eine periphere Systemeinheit FZ, PAC zur Kommunikation nach dem ersten Verfahren vorgesehene Funkgerät FG1, das eine Empfangs- und eine Sendeeinheit RX bzw. TX aufweist, die über Daten- und Steuerleitungen mit einem Bordrechner IB verbunden und die über eine Antennenweiche bzw. einen Umschalter US mit einer Antenne FA verbindbar sind. Durch den mit einer Modulations- und einer Demodulationseinheit versehenen Bordrechner IB, der u.a. zur Steuerung der im Fahrzeug FZ vorgesehenen Module dient, werden aufgrund von der Leitstelle LST oder vom Fahrzeugführer erhaltener Instruktionen die in Fig. 1 beschriebenen Kanalwechsel durchgeführt und Daten ausgegeben bzw. eingelesen.

Das in Fig. 5 gezeigte Funkgerät FG2 weist eine weitere mit einer Antenne FA2 verbundene Empfangseinheit RX2 auf, anhand der die von der Leitstelle LST über den ersten Datenkanal DK1 übertragenen Telegramme permanent überwacht werden, auch wenn die über den Umschalter US mit der Antenne FA1 gekoppelte Empfangseinheit RX1 und Sendeeinheit TX1 auf den Betrieb in einem der Sprachkanäle SK1, SK2 geschaltet sind. Aufrufe der Leitstelle LST über den Nahbereichskanal SK2 sind bei diesem zweiten Verfahren daher nicht mehr notwendig. Weiterhin entspricht die in Fig. 5 gezeigte Bordrechnerkonfiguration derjenigen von Fig. 4.

Die in Fig. 4 und Fig. 5 gezeigten Vorrichtungen sind vorzugsweise modular aufgebaute Einheiten, die kundenspezifisch konfiguriert werden. Bei grossen Verkehrsbetrieben sind unter Umständen zusätzliche Daten- und Sprachkanäle DK, SK vorhanden, zwischen denen die Sende- und Empfangseinheiten (RX, TX bzw. RX1, RX2 und TX1) gemäss den oben beschriebenen Verfahren umgeschaltet werden. Z.B. kann für die Kommmunikation zwischen dem Personal der Leitstelle LST und der Fahrzeuge FZ eine Umschaltung auf einen dritten Sprachkanal vorgesehen werden, falls z.B. der erste Sprachkanal SK1 belegt ist. Ferner kann ein vierter Datenkanal vorgesehen werden, auf den die erste Empfangseinheit RX1 periodisch umgeschaltet wird oder der durch eine dritte Empfangseinheit permanent überwacht wird. Ebenso können unterschiedlichen Fahrzeugen FZ, z.B. Schienenfahrzeugen, Bussen oder Taxis eigene Daten- und Sprachkanäle DK, SK zugeordnet werden.

Das in Fig. 4 und Fig. 5 gezeigte, für die periphere Systemeinheit Fahrzeug FZ vorgesehene Funkgerät FG1 bzw. FG2 weist die Minimalkonfiguration aller Elemente auf, welche für die Funkkommunikation nach dem erfindungsgemässen Verfahren benötigt werden.

## Patentansprüche

1. Verfahren zur Funkkommunikation zwischen zentralen und peripheren Einheiten eines verkehrstechnischen Leitsystems, das insbesondere aus einer Leitstelle (LST), Fahrzeugen (FZ) und Passagierinformationssystemen (PAC) besteht, die über wenigstens zwei Sprach- und zwei Datenkanäle (SK1, SK2, DK1, DK2) miteinander derart in Kontakt stehen, dass von der zentralen Einheit (LST) zu den peripheren Einheiten (FZ, PAC) über den ersten Datenkanal (DK1) und dazu korrespondierend von den peripheren Einheiten (FZ, PAC) zu der zentralen Einheit (LST) über den zweiten Datenkanal (DK2) Telegramme übermittelt werden, dass die zentralen und peripheren Einheiten (LST, FZ, PAC) über den ersten Sprachkanal (SK1) und die peripheren Einheiten (FZ) untereinander im Nahbereich über den zweiten Sprachkanal (SK2) kommunizieren, **dadurch gekennzeichnet**,
dass die peripheren Einheiten (FZ) eine Empfangs- und eine Sendeeinheit (RX, TX; RX1, TX1) aufweisen, die für den Normalbetriebszustand grundsätzlich auf den zweiten Sprachkanal (SK2) geschaltet werden,
und dass die peripheren Einheiten (FZ, PAC), die eine Empfangs- und eine Sendeeinheit (RX, TX) aufweisen, von der zentralen Einheit (LST) über den ersten Datenkanal (DK1) zyklisch in zugeteilten Zeitschlitzen aufgerufen werden und für den Empfang dieser Aufrufe die Empfangseinheit (RX) jeweils zyklisch auf den ersten Datenkanal (DK1) umschalten und für die Abgabe einer Antwort die Sendeeinheit (TX) auf den zweiten Datenkanal (DK2) umschalten,
oder dass die peripheren Einheiten (FZ, PAC), die zusätzlich eine zweite Empfangseinheit (RX2) aufweisen, von der zentralen Einheit (LST) über den ersten Datenkanal (DK1) bedarfsweise aufgerufen werden und aufgrund dieser Aufrufe, die durch die permanent auf den ersten Datenkanal (DK1) geschaltete zweite Empfangseinheit (RX2) empfangen werden, für die Abgabe einer Antwort die Sendeeinheit (TX1) auf den zweiten Datenkanal (DK2) umschalten.

2. Verfahren nach Anspruch 1, **dadurch gekennzeichnet**,
dass für die spontane Abgabe von Meldungen oder Schaltbefehlen insbesondere zur Beeinflussung von Lichtsignalanlagen (LSA) oder zur Steuerung von Passagierinformationssystemen (PAC) wenigstens ein weiterer Datenkanal (DK3) vorhanden ist, auf den der Sender (TX bzw. TX1) bedarfsweise umgeschaltet wird.

3. Verfahren nach Anspruch 1 oder 2, **dadurch gekennzeichnet**,
dass von der zentralen Einheit (LST) für jede periphere Einheit (FZ, PAC) zyklisch oder zumindest innerhalb von zeitlichen Abständen, die vorzugsweise kürzer als 30 Sekunden sind, selektive Aufrufe über den ersten Datenkanal (DK1) ausgesendet werden, nach deren Detektion die peripheren Einheiten (FZ, PAC) in einem zugehörigen Zeitschlitz Meldungen oder Status-Informationen über den zweiten Datenkanal (DK2) an die zentrale Einheit (LST) retoumieren können.

4. Verfahren nach Anspruch 3, **dadurch gekennzeichnet**,
dass mit den Sammelaufrufen auf dem ersten Datenkanal (DK1) die notwendigen Betriebsinformationen insbesondere zur Synchronisation der Zeitschlitze von der zentralen Einheit (LST) an alle peripheren Einheiten (FZ, PAC) übermittelt werden.

5. Verfahren nach einem der Ansprüche 1 bis 4, **dadurch gekennzeichnet**,
dass die zentrale Einheit (LST) über den zweiten Sprachkanal (SK2) oder über den ersten Datenkanal (DK1) einen an eine oder mehrere periphere Einheiten (FZ, PAC) adressierten Aufruf zur Umschaltung auf den ersten Sprachkanal (SK1) überträgt, um ein Gespräch zwischen dem Personal der zentralen und den betreffenden peripheren Einheiten (LST, FZ, PAC) zu ermöglichen.

6. Verfahren nach Anspruch 5, **dadurch gekennzeichnet**,
dass die Sendeleistung der Sendeeinheiten (TX; TX1) für die Übertragung von Sprachsignalen auf dem zweiten Sprachkanal (SK2) auf einen Wert eingestellt wird, der etwa 50 mal kleiner als die Sendeleistung ist, mit der die zentrale Einheit (LST) über den zweiten Sprachkanal (SK2) Aufrufe zur Umschaltung auf den ersten Datenkanal (DK1) oder auf den ersten Sprachkanal (SK1) ausstrahlt.

7. Verfahren nach Anspruch 5 oder 6, **dadurch gekennzeichnet**,
dass die zentrale Einheit (LST) über den ersten Sprach- oder Datenkanal (SK1, DK1) an die peripheren Einheiten (FZ, PAC) einen Schaltbefehl zur Beendigung des auf dem ersten Sprachkanal (SK1) geführten Gesprächs überträgt, wonach die peripheren Einheiten (FZ, PAC) die Empfangs- und Sendeeinheiten (RX, TX; RX1, TX1) in den Normalbetriebszustand umschalten, während dem die peripheren Einheiten (FZ) auf Empfang im zweiten Sprachkanal (SK2) und die peripheren Einheiten (PAC) auf Empfang im ersten oder einem weiteren Datenkanal (DK1, DK3) geschaltet sind.

8. Verfahren nach einem der Ansprüche 1 bis 7, **dadurch gekennzeichnet**,
dass für n periphere Einheiten (FZ, PAC), die keine permanent auf den ersten Datenkanal (DK1) geschaltete Empfangseinheit (RX2) aufweisen, n Zeitschlitze reserviert sind, die m Aufrufblöcken fest zugeteilt sind, welche innerhalb eines Zyklus, in dem alle angemeldeten peripheren Einheiten (FZ, PAC) aufgerufen werden, sequentiell über den ersten Datenkanal (DK1) abgearbeitet werden.

9. Verfahren nach Anspruch 8, **dadurch gekennzeichnet,**
dass in jedem Aufrufblock, nebst einem Zeitschlitz für einen Sammelaufruf, wenigstens ein reservierter Zeitschlitz vorgesehen ist, über den periphere Einheiten (FZ, PAC) bedarfsweise aufgerufen werden können.

10. Vorrichtung zur Funkkommunikation zwischen zentralen und peripheren Einheiten eines verkehrstechnischen Leitsystems, das insbesondere aus einer Leitstelle (LST), Fahrzeugen (FZ) und Passagierinformationssystemen (PAC) besteht, die über wenigstens zwei Sprach- und zwei Datenkanäle (SK1, SK2, DK1, DK2) miteinander in Kontakt stehen, dass die zentrale Einheit (LST) zur Abgabe von Aufrufen und Schaltbefehlen an die peripheren Einheiten (FZ, PAC) auf dem ersten Datenkanal (DK1) vorgesehen ist , dass die peripheren Einheiten (FZ, PAC) zur Abgabe von Meldungen an die zentrale Einheit (LST) über den zweiten Datenkanal (DK2) vorgesehen sind, dass die zentrale und die peripheren Einheiten (LST, FZ, PAC) zur Sprachkommunikation auf dem ersten Sprachkanal (SK1) und die peripheren Einheiten (FZ) untereinander zur Sprachkommunikation im Nahbereich auf dem zweiten Sprachkanal (SK2) vorgesehen sind, **dadurch gekennzeichnet**,
dass die mit einem Rechner (IB) versehenen peripheren Einheiten (FZ, PAC), die eine Empfangs- und eine Sendeeinheit (RX, TX) aufweisen, durch die zentrale Einheit (LST) über den ersten Datenkanal (DK1) zyklisch in zugeteilten Zeitschlitzen aufrufbar sind,
dass für den Empfang eines Aufrufs die Empfangseinheit (RX) zyklisch und zeitrichtig auf den ersten Datenkanal (DK1) und für die Abgabe einer Antwort die Sendeeinheit (TX) auf den zweiten Datenkanal (DK2) zyklisch und zeitrichtig umschaltbar ist,
dass die Empfangs- und Sendeeinheit (RX, TX) nach Erhalt eines von der zentralen Einheit (LST) über den zweiten Sprachkanal (SK2) oder den ersten Datenkanal (DK1) übertragenen Aufrufs auf den ersten Sprachkanal (SK1) umschaltbar ist, um ein Gespräch zwischen dem Personal der zentralen und den betreffenden peripheren Einheiten (LST, FZ, PAC) zu ermöglichen
und dass die peripheren Einheiten (FZ) derart ausgestaltet sind, dass sie die Empfangs- und Sendeeinheit (RX, TX), falls keine weiteren Informationen von der zentralen Einheit (LST) mehr vorliegen, automatisch auf den Normalbetriebszustand im zweiten Sprachkanal (SK2) umschalten.

11. Vorrichtung zur Funkkommunikation zwischen zentralen und peripheren Einheiten eines verkehrstechnischen Leitsystems, das insbesondere aus einer Leitstelle (LST), Fahrzeugen (FZ) und Passagierinformationssystemen (PAC) besteht, die über wenigstens zwei Sprach- und zwei Datenkanäle (SK1, SK2, DK1, DK2) miteinander in Kontakt stehen, dass die zentrale Einheit (LST) zur Abgabe von Aufrufen und Schaltbefehlen an die peripheren Einheiten (FZ, PAC) auf dem ersten Datenkanal (DK1) vorgesehen ist, dass die peripheren Einheiten (FZ, PAC) zur Abgabe von Meldungen an die zentrale Einheit (LST) über den zweiten Datenkanal (DK2) vorgesehen sind, dass die zentralen und peripheren Einheiten (LST, FZ, PAC) zur Sprachkommunikation auf dem ersten Sprachkanal (SK1) und die peripheren Einheiten (FZ) untereinander zur Sprachkommunikation im Nahbereich auf dem zweiten Sprachkanal (SK2) vorgesehen sind, **dadurch gekennzeichnet**,
dass die mit einem Rechner (IB) versehenen peripheren Einheiten (FZ, PAC), die zwei Empfangseinheiten (RX1, RX2) und eine Sendeeinheit (TX1) aufweisen, durch die zentrale Einheit (LST) über den ersten Datenkanal (DK1) bedarfsweise aufrufbar sind,
dass die zweite Empfangseinheit (RX2) zum permanenten Empfang der über den ersten Datenkanal (DK1) übertragenen Aufrufe vorgesehen ist, zu deren Beantwortung die Sendeeinheit (TX1) auf den zweiten Datenkanal (DK2) umschaltbar ist,
dass die erste Empfangseinheit (RX1) und die Sendeeinheit (TX1) nach Erhalt eines Aufrufs von der zentralen Einheit (LST) auf den ersten Sprachkanal (SK1) umschaltbar sind, um ein Gespräch zwischen dem Personal der zentralen und den betreffenden peripheren Einheiten (LST, FZ, PAC) zu ermöglichen und dass die peripheren Einheiten (FZ) derart ausgestaltet sind, dass sie die erste Empfangseinheit (RX1) und die Sendeeinheit (TX1), falls keine weiteren Informationen von der zentralen Einheit (LST) mehr vorliegen, automatisch auf den Normalbetriebszustand im zweiten Sprachkanal (SK2) umschalten.

12. Vorrichtung nach Anspruch 10 oder 11, **dadurch gekennzeichnet**,
dass die erste und gegebenenfalls weitere in den peripheren Passagierinformationssystemen (PAC) vorgesehenen Empfangseinheiten (RX; RX1, RX2) im Normalbetriebszustand, während dem keine weiteren Informationen von der zentralen Einheit (LST) vorliegen, zum Empfang der auf dem ersten oder auf weiteren Datenkanälen (DK1, DK3) übertragenen Daten vorgesehen sind.

13. Vorrichtung nach Anspruch 10, 11 oder 12, **dadurch gekennzeichnet**, dass
die in den peripheren Einheiten (FZ) vorgesehenen Sendeeinheiten (TX; TX1) zur spontanen Abgabe von Meldungen oder Schaltbefehlen bedarfsweise auf wenigstens einen weiteren Datenkanal (DK3) umschaltbar sind.

14. Vorrichtung nach einem der Ansprüche 10 bis 13, **dadurch gekennzeichnet**,
dass die Sendeleistung der Sendeeinheiten (TX; TX1) für die Übertragung von Sprachsignalen auf dem zweiten Sprachkanal (SK2) auf einen Wert eingestellt wird, der etwa 50 mal kleiner als die Sendeleistung ist, mit der die zentrale Einheit (LST) über den zweiten Sprachkanal (SK2) Aufrufe zur Umschaltung auf den ersten Datenkanal (DK1) oder auf den ersten Sprachkanal (SK1) ausstrahlt.

## Claims

1. Process for radio communication between central and peripheral units of a traffic guidance system comprising in particular a master terminal (LST), vehicles (FZ) and passenger information systems (PAC) that are in contact with one another via at least two voice channels and two data channels (SK1, SK2, DK1, DK2) in such a way that messages are transmitted from the central unit (LST) to the peripheral units (FZ, PAC) via the first data channel (DK1), and correspondingly from the peripheral units (FZ, PAC) to the central unit (LST) via the second data channel (DK2), and that the central and peripheral units (LST, FZ, PAC) communicate via the first voice channel (SK1) and the peripheral units (FZ) communicate in close proximity to one another via the second voice channel (SK2), characterised in that the peripheral units (FZ) have a receiving unit and a transmitting unit (RX, TX; RX1, TX1) that are switched, in the normal operational state, in principle to the second voice channel (SK2), and that the peripheral units (FZ, PAC), which include a receiving unit and a transmitting unit (RX, TX), are called up cyclically in subdivided time slots by the central unit (LST) via the first data channel (DK1), and in order to receive these calls the receiving unit (RX) in each case cyclically switches to the first data channel (DK1) and in order to send a response the transmitting unit (TX) switches to the second data channel (DK2), or that the peripheral units (FZ, PAC), which in addition comprise a second receiving unit (RX2), are called up as required by the central unit (LST) via the first data channel (DK1) and, on the basis of these calls, which are received by the second receiving unit (RX2) permanently switched to the first data channel (DK1), switch the transmitting unit (TX1) to the second data channel (DK2) in order to send a response.

2. Process according to claim 1, characterised in that at least one further data channel (DK3), to which the transmitter (TX or TX1) is switched as and when necessary, is provided for the spontaneous transmission of messages or switching commands, in particular in order to influence light signal units (LSA) or to control passenger information systems (PAC).

3. Process according to claim 1 or 2, characterised in that selective calls are transmitted from the central unit (LST) via the first data channel (DK1) to each peripheral unit (FZ, PAC) cyclically or at least within time intervals that are preferably shorter than 30 seconds, following the detection of which the peripheral units (FZ, PAC) can return in an allocated time slot messages or status information via the second data channel (DK2) to the central unit (LST).

4. Process according to claim 3, characterised in that the necessary operational information, in particular for synchronising the time slots from the central unit (LST), is transmitted to all peripheral units (FZ, PAC) together with the collective calls on the first data channel (DK1).

5. Process according to one of claims 1 to 4,
characterised in that the central unit (LST) transmits via the second voice channel (SK2) or via the first data channel (DK1) a call to one or more peripheral units (FZ, PAC) to switch to the first voice channel (SK1), in order to enable a conversation to be held between the personnel of the central unit and the relevant peripheral units (LST, FZ, PAC).

6. Process according to claim 5, characterised in that the transmission output of the transmitting units (TX, TX1) for transmitting voice signals on the second voice channel (SK2) is adjusted to a value that is about 50 times less than the transmission output with which the central unit (LST) transmits calls via the second voice channel (SK2) to switch over to the first data channel (DK1) or to the first voice channel (SK1).

7. Process according to claim 5 or 6, characterised in that the central unit (LST) transmits via the first voice channel or data channel (SK1, DK1) a switching command to the peripheral units (FZ, PAC) to terminate the conversation being conducted on the first voice channel (SK1), following which the peripheral units (FZ, PAC) switch the receiving units and transmitting units (RX, TX; RX1, TX1) to the normal operational state, and in the meantime the peripheral units (FZ) are switched over to receive in the second voice channel (SK2) and the peripheral units (PAC) are switched over to receive in the first or a further data channel (DK1, DK3).

8. Process according to one of claims 1 to 7,
characterised in that n time slots are reserved for n peripheral units (FZ, PAC) that do not have a receiving unit (RX2) permanently switched to the first data channel (DK1), which time slots are strictly subdivided into call-up blocks that are processed in sequence via the first data channel (DK1) within a cycle in which all contacted peripheral units (FZ, PAC) are called.

9. Process according to claim 8, characterised in that in each call-up block, in addition to a time slot for a collective call, at least one reserved time slot is provided via which peripheral units (FZ, PAC) can be called up as necessary.

10. Arrangement for radio communication between central and peripheral units of a traffic guidance system comprising in particular a master terminal (LST), vehicles (FZ) and passenger information systems (PAC) that are in contact with one another via at least two voice channels and two data channels (SK1, SK2, DK1, DK2) so that the central unit (LST) is provided for transmitting calls and switching commands to the peripheral units (FZ, PAC) via the first data channel (DK1), that the peripheral units (FZ, PAC) are provided for transmitting messages to the central unit (LST) via the second data channel (DK2), and that the central and the peripheral units (LST, FZ, PAC) are provided for voice communication on the first voice channel (SK1) and the peripheral units (FZ) are provided for voice communication in close proximity on the second voice channel (SK2), characterised in that the peripheral units (FZ, PAC) provided with a computer (IB) and that have a receiving unit and a transmitting unit (RX, TX), can be called up cyclically in sub-divided time slots through the central unit (LST) via the first data channel (DK1), that the receiving unit (RX) can be switched cyclically and at the correct time to the first data channel (DK1) in order to receive a call and the transmitting unit (TX) can be switched cyclically and at the correct time to the second data channel (DK2) in order to transmit a response, that the receiving unit and transmitting unit (RX, TX) after receipt of a call transmitted from the central unit (LST) via the second voice channel (SK2) or the first data channel (DK1) can be switched to the first voice channel (SK1) in order to permit a conversation to be held between the personnel of the central unit and the relevant peripheral units (LST, FZ, PAC), and that the peripheral units (FZ) are designed so that the receiving unit and transmitting unit (RX, TX) switch automatically to the normal operational state in the second voice channel (SK2) if there is no further information from the central unit (LST).

11. Arrangement for radio communication between central and peripheral units of a traffic guidance system comprising in particular a master terminal (LST), vehicles (FZ) and passenger information systems (PAC) that are in contact with one another via at least two voice channels and two data channels (SK1, SK2, DK1, DK2) so that the central unit (LST) is provided for transmitting calls and switching commands to the peripheral units (FZ, PAC) via the first data channel (DK1), that the peripheral units (FZ, PAC) are provided for transmitting messages to the central unit (LST) via the second data channel (DK2), and that the central and the peripheral units (LST, FZ, PAC) are provided for voice communication on the first voice channel (SK1) and the peripheral units (FZ) are provided for voice communication in close proximity on the second voice channel (SK2), characterised in that the peripheral units (FZ, PAC) provided with a computer (IB) and that have two receiving units (RX1, RX2) and one transmitting unit (TX1) can be called as necessary by the central unit (LST) via the first data channel (DK1), that the second receiving unit (RX2) is provided for the permanent reception of the calls transmitted via the first data channel (DK1), to respond to which calls the transmitting unit (TX1) can be switched to the second data channel (DK2), that the first receiving unit (RX1) and the transmitting unit (TX1) can be switched to the first voice channel (SK1) after receiving a call from the central unit (LST), in order to permit a conversation to be held between the personnel of the central unit and the relevant peripheral units (LST, FZ, PAC), and that the peripheral units (FZ) are designed so that they switch the first receiving unit (RX1) and the transmitting unit (TX1) automatically to the normal operational state in the second voice channel (SK2) if there is no further information from the central unit (LST).

12. Arrangement according to claim 10 or 11,
characterised in that the first and optionally further receiving units (RX; RX1, RX2) provided in the peripheral passenger information systems (PAC) are designed to receive in the normal operational state the data transmitted on the first or on further data channels (DK1, DK3) while there is no further information from the central unit (LST).

13. Arrangement according to claim 10, 11 or 12,
characterised in that the transmitting unit (TX; TX1) provided in the peripheral units (FZ) can be switched as necessary to at least one further data channel (DK3) for the spontaneous transmission of messages or switching commands.

14. Arrangement according to one of claims 10 to 13,
characterised in that the transmission output of the transmitting units (TX; TX1) for transmitting voice signals on the second voice channel (SK2) is adjusted to a value that is about 50 times less than the transmission output at which the central unit (LST) transmits calls via the second voice channel (SK2) to switch to the first data channel (DK1) or to the first voice channel (SK1).

## Revendications

1. Procédé pour la communication par radio entre des unités centrales et périphériques d'un système de guidage de la circulation routière qui est constitué notamment d'un poste de guidage (LST), de véhicules (FZ) et de systèmes d'information des passagers (PAC) qui sont en contact mutuel par l'intermédiaire d'au moins deux canaux de conversation (SK1, SK2) et deux canaux de données (DK1, DK2) de telle sorte que l'unité centrale (LST) peut transmettre des télégrammes aux unités périphériques (FZ, PAC) par l'intermédiaire du premier canal de données (DK1), que les unités périphériques (FZ, PAC) peuvent transmettre de manière correspondante des télégrammes à l'unité centrale (LST) par l'intermédiaire du deuxième canal de données (DK2) et que les unités centrales et périphériques (LST, FZ, PAC) communiquent entre elles par l'intermédiaire du premier canal de conversation (SK1) et les unités périphériques (FZ) communiquent entre elles par l'intermédiaire du deuxième canal de conversation (SK2) dans la zone rapprochée, caractérisé par le fait que
les unités périphériques (FZ) comportent une unité réceptrice et une unité émettrice (RX, TX ; RX1, TX1) qui sont commutées fondamentalement sur le deuxième canal de conversation (SK2) pour l'état de fonctionnement normal,
et les unités périphériques (FZ, PAC) qui comportent une unité réceptrice et une unité émettrice (RX, TX) sont appelées cycliquement, dans des créneaux temporels attribués, par l'unité centrale (LST) par l'intermédiaire du premier canal de données (DK1), commutent pour la réception de ces appels l'unité réceptrice (RX) à chaque fois cycliquement sur le premier canal de données (DK1) et commutent pour l'envoi d'une réponse l'unité émettrice (TX) sur le deuxième canal de données (DK2),
ou les unités périphériques (FZ, PAC) qui comportent en plus une deuxième unité réceptrice (RX2) sont appelées si nécessaire par l'unité centrale (LST) par l'intermédiaire du premier canal de données (DK1) et, en raison de ces appels qui sont reçus par la deuxième unité réceptrice (RX2) branchée en permanence sur le premier canal de données (DK1) commutent pour l'envoi d'une réponse l'unité émettrice (TX1) sur le deuxième canal de données (DK2).

2. Procédé selon la revendication 1, caractérisé par le fait que,
pour l'envoi spontané de messages ou d'instructions de commutation notamment afin d'influencer des installations de feux de signalisation (LSA) ou afin de commander des systèmes d'information des passagers (PAC), il est prévu au moins un autre canal de données (DK3) sur lequel l'émetteur (TX ou TX1) est commuté si nécessaire.

3. Procédé selon la revendication 1 ou 2, caractérisé par le fait que
l'unité centrale (LST) envoie pour chaque unité périphérique (FZ, PAC), cycliquement ou au moins à des intervalles de temps qui sont de préférence inférieurs à 30 secondes, par l'intermédiaire du premier canal de données (DK1), des appels sélectifs après la détection desquels les unités périphériques (FZ, PAC) peuvent renvoyer dans un créneau temporel associé des messages ou des informations d'état par l'intermédiaire du deuxième canal de données (DK2) vers l'unité centrale (LST).

4. Procédé selon la revendication 3, caractérisé par le fait que,
avec les appels généraux sur le premier canal de données (DK1), les informations d'exploitation nécessaires, notamment pour la synchronisation des créneaux temporels, sont transmises par l'unité centrale (LST) à toutes les unités périphériques (FZ, PAC).

5. Procédé selon l'une des revendications 1 à 4, caractérisé par le fait que
l'unité centrale (LST) transmet par l'intermédiaire du deuxième canal de conversation (SK2) ou par l'intermédiaire du premier canal de données (DK1) un appel adressé à une ou plusieurs unités périphériques (FZ, PAC) pour la commutation sur le premier canal de conversation (SK1) afin de permettre une conversation entre le personnel de l'unité centrale (LST) et des unités périphériques concernées (FZ, PAC).

6. Procédé selon la revendication 5, caractérisé par le fait que
la puissance d'émission des unités émettrices (TX ; TX1) pour la transmission de signaux vocaux sur le deuxième canal de conversation (SK2) est réglée à une valeur qui est environ 50 fois plus petite que la puissance d'émission avec laquelle l'unité centrale (LST) envoie par l'intermédiaire du deuxième canal de conversation (SK2) des appels pour la commutation sur le premier canal de données (DK1) ou sur le premier canal de conversation (SK1).

7. Procédé selon la revendication 5 ou 6, caractérisé par le fait que
l'unité centrale (LST) transmet par l'intermédiaire du premier canal de conversation (SK1) ou du premier canal de données (DK1) aux unités périphériques (FZ, PAC) une instruction de commutation pour terminer la conversation en cours sur le premier canal de conversation (SK1), à la suite de quoi les unités périphériques (FZ, PAC) commutent les unités réceptrices et émettrices (RX, TX ; RX1, TX1) dans l'état de fonctionnement normal pendant lequel les unités périphériques (FZ) sont commutées sur la réception dans le deuxième canal de conversation (SK2) et les unités périphériques (PAC) sont commutées sur la réception dans le premier ou un autre canal de données (DK1, DK3).

8. Procédé selon l'une des revendications 1 à 7, caractérisé par le fait que,
pour n unités périphériques (FZ, PAC) qui ne comportent pas d'unité réceptrice (RX2) commutée en permanence sur le premier canal de données (DK1), il est réservé n créneaux temporels qui sont attribués de manière fixe à m blocs d'appel qui sont traités séquentiellement par l'intermédiaire du premier canal de données (DK1) à l'intérieur d'un cycle dans lequel toutes les unités périphériques annoncées (FZ, PAC) sont appelées.

9. Procédé selon la revendication 8, caractérisé par le fait que,
dans chaque bloc d'appel, outre un créneau temporel pour un appel général, il est prévu au moins un créneau temporel réservé par l'intermédiaire duquel des unités périphériques (FZ, PAC) peuvent être appelées si nécessaire.

10. Dispositif pour la communication par radio entre des unités centrales et périphériques d'un système de guidage de la circulation routière qui est constitué notamment d'un poste de guidage (LST), de véhicules (FZ) et de systèmes d'information des passagers (PAC) qui sont en contact mutuel par l'intermédiaire d'au moins deux canaux de conversation (SK1, SK2) et deux canaux de données (DK1, DK2) de telle sorte que l'unité centrale (LST) est prévue pour envoyer des appels et des instructions de commutation aux unités périphériques (FZ, PAC) sur le premier canal de données (DK1), que les unités périphériques (FZ, PAC) sont prévues pour envoyer des messages à l'unité centrale (LST) par l'intermédiaire du deuxième canal de données (DK2), que l'unité centrale (LST) et les unités périphériques (FZ, PAC) sont prévues pour une communication vocale sur le premier canal de conversation (SK1) et les unités périphériques (FZ) sont prévues pour une communication vocale entre elles dans la zone rapprochée sur le deuxième canal de conversation (SK2), caractérisé par le fait que
les unités périphériques (FZ, PAC) qui sont munies d'un ordinateur (IB) et qui comportent une unité réceptrice (RX) et une unité émettrice (TX) peuvent être appelées cycliquement, dans des créneaux temporels attribués, par l'unité centrale (LST) par l'intermédiaire du premier canal de données (DK1),
pour la réception d'un appel, l'unité réceptrice (RX) peut être commutée cycliquement et à un instant correct sur le premier canal de données (DK1) et, pour l'envoi d'une réponse, l'unité émettrice (TX) peut être commutée cycliquement et à un instant correct sur le deuxième canal de données (DK2),
les unités réceptrices et émettrices (RX, TX) peuvent être commutées sur le premier canal de conversation (SK1) après la réception d'un appel transmis par l'unité centrale (LST) par l'intermédiaire du deuxième canal de conversation (SK2) ou du premier canal de données (DK1) afin de permettre une conversation entre le personnel de l'unité centrale (LST) et des unités périphériques concernées (FZ, PAC)
et les unités périphériques (FZ) sont conçues de telle sorte qu'elles commutent automatiquement les unités réceptrices et émettrices (RX, TX), s'il n'y a plus aucune autre information de l'unité centrale (LST), dans l'état de fonctionnement normal sur le deuxième canal de conversation (SK2).

11. Dispositif pour la communication par radio entre des unités centrales et périphériques d'un système de guidage de la circulation routière qui est constitué notamment d'un poste de guidage (LST), de véhicules (FZ) et de systèmes d'information des passagers (PAC) qui sont en contact mutuel par l'intermédiaire d'au moins deux canaux de conversation (SK1, SK2) et deux canaux de données (DK1, DK2) de telle sorte que l'unité centrale (LST) est prévue pour envoyer des appels et des instructions de commutation aux unités périphériques (FZ, PAC) sur le premier canal de données (DK1), que les unités périphériques (FZ, PAC) sont prévues pour envoyer des messages à l'unité centrale (LST) par l'intermédiaire du deuxième canal de données (DK2), que l'unité centrale (LST) et les unités périphériques (FZ, PAC) sont prévues pour une communication vocale sur le premier canal de conversation (SK1) et les unités périphériques (FZ) sont prévues pour une communication vocale entre elles dans la zone rapprochée sur le deuxième canal de conversation (SK2), caractérisé par le fait que
les unités périphériques (FZ, PAC) qui sont munies d'un ordinateur (IB) et qui comportent deux unités réceptrices (RX1, RX2) et une unité émettrice (TX1) peuvent être appelées si nécessaire par l'unité centrale (LST) par l'intermédiaire du premier canal de données (DK1),
la deuxième unité réceptrice (RX2) est prévue pour la réception permanente des appels qui sont transmis par l'intermédiaire du premier canal de données (DK1), l'unité émettrice (TX1) pouvant être commutée sur le deuxième canal de données (DK2) pour répondre à ces appels,
la première unité réceptrice (RX1) et l'unité émettrice (TX1) après la réception d'un appel de l'unité centrale (LST) peuvent être commutées sur le premier canal de conversation (SK1) pour permettre une conversation entre le personnel de l'unité centrale (LST) et des unités périphériques (FZ, PAC)
et les unités périphériques (FZ) sont conçues de telle sorte qu'elles commutent automatiquement la première unité réceptrice (RX1) et l'unité émettrice (TX1), s'il n'y a plus aucune autre information de l'unité centrale (LST), dans l'état de fonctionnement normal sur le deuxième canal de conversation (SK2).

12. Dispositif selon la revendication 10 ou 11, caractérisé par le fait que
la première et éventuellement d'autres unités réceptrices (RX ; RX1, RX2) prévues dans les systèmes d'information des passagers (PAC) sont prévues dans l'état de fonctionnement normal, pendant lequel il n'y a aucune autre information de l'unité centrale (LST), pour la réception des données transmises sur le premier ou d'autres canaux de données (DK1, DK3).

13. Dispositif selon la revendication 10, 11 ou 12, caractérisé par le fait que
les unités émettrices (TX ; TX1) prévues dans les unités périphériques (FZ) peuvent être commutées pour l'envoi spontané de messages ou d'instructions de commutation si nécessaire sur au moins un autre canal de données (DK3).

14. Dispositif selon l'une des revendications 10 à 13, caractérisé par le fait que
la puissance d'émission des unités émettrices (TX ; TX1) pour la transmission de signaux vocaux sur le deuxième canal de conversation (SK2) est réglée à une valeur qui est environ 50 fois plus petite que la puissance d'émission avec laquelle l'unité centrale (LST) envoie par l'intermédiaire du deuxième canal de conversation (SK2) des appels pour la commutation sur le premier canal de données (DK1) ou sur le premier canal de conversation (SK1).
